(19) Europäisches Patentamt
European Patent Office
Office européen des brevets

(11) **EP 4 510 329 A1**

(12) **EUROPEAN PATENT APPLICATION**
published in accordance with Art. 153(4) EPC

(43) Date of publication:
**19.02.2025 Bulletin 2025/08**

(21) Application number: **22963085.0**

(22) Date of filing: **27.10.2022**

(51) International Patent Classification (IPC):
*H01M 50/204* (2021.01)    *H01M 50/262* (2021.01)
*H01M 50/267* (2021.01)

(52) Cooperative Patent Classification (CPC):
**H01M 50/204; H01M 50/242; H01M 50/244;**
**H01M 50/262; H01M 50/267; H01M 50/271;**
**H01M 50/30;** Y02E 60/10

(86) International application number:
**PCT/CN2022/127966**

(87) International publication number:
**WO 2024/087101 (02.05.2024 Gazette 2024/18)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **XU, Hu**
**Ningde, Fujian 352100 (CN)**
• **JIN, Haizu**
**Ningde, Fujian 352100 (CN)**
• **NIU, Shaojun**
**Ningde, Fujian 352100 (CN)**
• **ZHAO, Fenggang**
**Ningde, Fujian 352100 (CN)**
• **ZENG, Yuqun**
**Ningde, Fujian 352100 (CN)**

(74) Representative: **Ran, Handong**
**Maucher Jenkins**
**Seventh Floor Offices**
**Artillery House**
**11-19 Artillery Row**
**London SW1P 1RT (GB)**

(54) **BATTERY AND ELECTRICAL DEVICE**

(57)     A battery (1000) and an electrical device (2000). The battery (1000) comprises: a battery pack (10), comprising one layer of battery rows (11) or a plurality of layers of battery rows (11) stacked in a first direction (F1), wherein the battery row (11) comprises one battery cell (12) or a plurality of battery cells (12) arranged in a second direction (F2), and a first surface (124) of a housing (121) of the battery cell (12) perpendicular to the first direction (F1) is a surface having the largest area; and a pressure applying member (20), provided on at least one side of the battery pack (10) in the first direction (F1), wherein the pressure applying member (20) abuts against the first surface (124), and the position of the pressure applying member (20) in the first direction (F1) is adjustable.

FIG. 1

## Description

## FIELD

The present application relates to the technical field of batteries, and in particular, to a battery and an electrical device.

## BACKGROUND

In the related technologies, a battery cell may expand in a usage process, resulting in that the battery cell is prone to overpressure to cause poor infiltration, or to be too loose leading to cause interface difference.

## SUMMARY

An embodiment of the present application provides a battery and an electrical device, in which in a whole service life of the battery, a pressure applying component applies a proper pressing force to a battery cell to avoid the battery cell from being over-pressed or too loose.

In a first aspect, an embodiment of the present application provides a battery that includes at least one battery module and a pressure applying component. The battery module includes one layer of battery row or a plurality of layers of battery rows stacked in a first direction, and the battery row includes one battery cell or a plurality of battery cells arranged in a second direction. The second direction is perpendicular to the first direction. The battery cell has a housing including a first surface perpendicular to the first direction, and the first surface is a surface of the housing having the largest area. The pressure applying component is provided on at least one side of the at least one battery module in the first direction, the pressure applying component abuts against the first surface of the at least one battery module, and a position of the pressure applying component in the first direction is adjustable.

In the above technical solution, a pressing force is applied to the first surface of the battery module in the first direction through the pressure applying component, and the position of the pressure applying component in the first direction is adjustable. Accordingly, in the whole service life of the battery module, the pressure applying component can apply a proper pressing force to the battery cell in the battery module, to prevent poor infiltration caused by being over-pressed of the battery cell in the battery module, and to prevent the interface difference caused by being too loose.

In some embodiments, a surface at an end of the battery cell in the first direction is the first surface, or each of two opposite surfaces of the battery cell that are opposite to each other in the first direction are both the first surfaces. In the above technical solution, the expansion of the battery cell in the first direction is reduced, or it is convenient for the pressure applying component to apply the pressing force to the two first surfaces to effectively prevent the battery cell from being over-pressed or too loose.

In some embodiments, a thickness of the battery cell in the first direction is T, and an adjustable stroke of the pressure applying component in the first direction is H, where $1\% \leq T/H \leq 10\%$. In the above technical solution, on the premise that an adjusting requirement of the pressing force in the whole service life process of the battery module is guaranteed, a reserved space is prevented from being too large, thereby making the structure of the battery more compact.

In some embodiments, the pressure applying component includes a pressing plate provided on a side of the at least one battery module in the first direction, and an adjustable stroke of the pressing plate is H. Alternatively, the pressure applying component includes a first pressing plate and a second pressing plate that are respectively arranged on on two sides of the at least one battery module, and a total adjustable stroke of the first pressing plate and the second pressing plate is H. In the above technical solution, interference of the battery module on the pressure adjustment is avoided, or the adjustment is more flexible.

In some embodiments, an area of a projection of the pressure applying component in the first direction is S, a distance between two side surfaces of the at least one battery module that are located on outermost sides in the second direction is M, a distance between two side surfaces of the at least one battery module that are located on outermost sides in a third direction is N, the first direction and the second direction are both perpendicular to the third direction (F3), where $100\% \leq S/(M \times N) \leq 110\%$. In the above technical solution, it is beneficial for the pressure applying component to apply the pressing force to all the battery modules of the battery, to guarantee the performance of the battery module with a simpler structure and to make the structure more compact.

In some embodiments, in the second direction, a dimension of an edge of the pressure applying component extending beyond an edge of the at least one battery module is L1, and in a third direction, a dimension of an edge of the pressure applying component extending beyond an edge of the at least one battery module is L2, where $3 \text{ mm} \leq L1 \leq 10 \text{ mm}$, and $3 \text{ mm} \leq L2 \leq 10 \text{ mm}$. The first direction and the second direction are both perpendicular to the third direction. In the above technical solution, it is beneficial for the pressure applying component to apply the pressing force to all the battery modules of the battery, to guarantee the performance of the battery module with a simpler structure and to make the structure more compact.

In some embodiments, the battery further includes: a case, in which the at least one battery module and the pressure applying component are located in the case; and at least one adjusting component provided on a side of the pressure applying component facing away from the at least one battery module. The at least one adjusting component each includes a fixing portion and a movable portion, the fixing portion is mounted to the case, and the movable portion abuts against the pressure applying component and is movably mounted to the fixing portion in the first direction. In the above technical solution, it is more convenient to adjust the position of the pressure applying component, and an operation space does not need to be reserved on an outer side of the edge of the pressure applying component, thereby making the structure more compact.

In some embodiments, the fixing portion is in threaded fit with the movable portion; the fixing portion is a motor, and the movable portion is a telescopic rod; or the fixing portion has an air pressure chamber, an air pressure in the air pressure chamber is adjustable, and the movable portion extends into the air pressure chamber and is movable under driving of the air pressure. In the above technical solution, the adjusting component is simple in structure and high in the adjusting precision of the pressing force.

In some embodiments, the at least one adjusting component includes a plurality of the adjusting components arranged at intervals in a circumferential direction of the pressure applying component and engaged with a periphery of the pressure applying component. In the above technical solution, the forces applied to the pressure applying component are more uniform.

In some embodiments, the battery further includes a supporting structure provided between two adjacent layers of the battery rows and engaged with the two adjacent layers of the battery rows. In the above technical solution, the overall structural strength of the battery is improved.

In some embodiments, a thickness of the supporting structure in the first direction ranges from 1 mm to 8 mm. In the above technical solution, on the premise that the structural strength requirement is guaranteed, the structure of the battery module is more compact, and it is beneficial to reduce a volume of the battery.

In some embodiments, the supporting structure is connected to the two adjacent layers of the battery row. In the above technical solution, the rigidity of the battery row is further improved.

In some embodiments, the supporting structure includes at least one of a thermal insulation layer, a buffer portion, or a heat exchange channel. In the above technical solution, functions of the supporting structure are more diversified.

In some embodiments, the at least one battery module includes a plurality of the battery modules arranged in a third direction, and the first direction and the second direction are both perpendicular to the third direction. In the above technical solution, it facilitates to meet requirements of different installation spaces and different electric quantities of the battery.

In some embodiments, the pressure applying component abuts against the first surfaces of the plurality of battery modules. In the above technical solution, consistency of the adjustment of the pressing forces of the plurality of the battery modules is high.

In some embodiments, the battery further includes a reinforcing structure extending along the second direction. The reinforcing structure is provided between two adjacent battery modules of the plurality of battery modules and engaged with the two adjacent battery modules. In the above technical solution, the structural strength of the battery is further improved.

In some embodiments, the battery cell is provided with a pressure relief portion on a surface of the battery cell facing toward the reinforcing structure. In the above technical solution, emissions can be prevented from being directly sprayed to other battery cells.

In some embodiments, the reinforcing structure is provided with a flame-retardant portion opposite to the pressure relief portion. In the above technical solution, thermal runaway diffusion can be prevented.

In some embodiments, the reinforcing structure is provided with a recess facing toward the pressure relief portion. In the above technical solution, it is guaranteed that the pressure relief portion can smoothly relieve pressure.

In some embodiments, the housing is provided with a pressure relief portion on a sidewall thereof, and a wall thickness of the sidewall of the housing ranges from 0.8 mm to 3 mm. In the above technical solution, the housing and the pressure relief portion are stable in structure and stable in installation, consistency of the pressure relief portion is good, both pressure relief timeliness and low cost are satisfied, and explosion is avoided.

In some embodiments, the housing is provided with a pressure relief portion, and the pressure relief portion is a thinned region provided on the housing or a pressure relief valve mounted on a sidewall of the housing. In the above technical solution, it is beneficial to simplify the structure and reduce the processing difficulty.

In some embodiments, the housing of the battery cell is provided with a pressure relief portion and an electrical connection portion, and the pressure relief portion and the electrical connection portion are arranged on different sides of the housing. In the above technical solution, pressure relief emissions can be prevented from being directly sprayed to the electrical connection portion, and short circuit is prevented.

In some embodiments, the housing includes a shell, a first cover, and a second cover, the first cover and the second cover respectively cover ends of the shell, the first cover is provided with an electrical connection portion, and the second cover is provided with a pressure relief portion. In the above technical solution, it is more convenient to install and operate the electrical connection portion and the pressure relief portion.

In a second aspect, an embodiment of the present application further provides an electrical device including the battery described above, and the battery is configured to provide electric energy to the electrical device.

## BRIEF DESCRIPTION OF THE DRAWINGS

FIG. 1 is a schematic diagram of a battery along a third direction according to an embodiment of the present application.

FIG. 2 is a schematic enlarged diagram illustrating a structure of a portion, which is indicated by a circle A as shown in FIG. 1, of a battery according to a first embodiment of the present application.

FIG. 3 is a schematic enlarged diagram illustrating a structure of a portion, which is indicated by the circle A as shown in FIG. 1, of a battery according to a second embodiment of the present application.

FIG. 4 is a schematic enlarged diagram illustrating a structure of a portion, which is indicated by the circle A as shown in FIG. 1, of a battery according to a third embodiment of the present application.

FIG. 5 is a schematic diagram of a battery along a first direction according to an embodiment of the present application.

FIG. 6 is a schematic structural diagram of a battery cell according to an embodiment of the present application.

FIG. 7 is a schematic diagram of an electrical device according to some embodiments of the present application.

Reference Signs:

battery 1000; electrical device 2000;
battery module 10; battery row 11; battery cell 12;
housing 121; electrical connection portion 122; pressure relief portion 123; first surface 124;
pressure applying component 20; first pressing plate 21; second pressing plate 22;
adjusting component 30; fixing portion 31; movable portion 32; air pressure chamber 33;
case 40;
supporting structure 50; reinforcing structure 60;
first direction F1; second direction F2; third direction F3.

## DESCRIPTION OF EMBODIMENTS

In order to make objectives, technical solutions and advantages of the embodiments of the present application clearer, the technical solutions in the embodiments of the present application are clearly described below in conjunction with the drawings in the embodiments of the present application. Obviously, the described embodiments are some embodiments of the present application rather than all embodiments. Based on the embodiments of the present application, all other embodiments obtained by those skilled in the art without creative efforts shall fall within the scope of the present application.

Unless otherwise defined, all technical and scientific terms used in the present application have the same meaning as commonly understood by those skilled in the art of the present application. The terms used in the description of the present application are only for the purpose of describing specific embodiments and are not intended to limit the present application. The terms "include" and "have" as well as any variations thereof in the specification, claims or the description of the accompanying drawings of the present application are intended to cover non-exclusive inclusion. The terms "first", "second" and the like in the specification, claims or the description of the accompanying drawings of the present application are used for distinguishing different objects, but are not used for describing a specific sequence or a primary and secondary relationship.

The "embodiment" in the present application means that a particular feature, structure, or characteristic described in connection with an embodiment may be included in at least one embodiment of the present application. The appearances of this phrase in various positions in the specification are not necessarily all referring to the same embodiment, nor are independent or alternative embodiments mutually exclusive of other embodiments.

In the description of the present application, it should be noted that unless otherwise specified and limited, terms "mount", "communicate", "connect" and "attach" should be understood in a broad sense, for example, it may be fixedly connected or detachably connected, or integrally connected; and it may be directly connected or indirectly connected by means of an intermediate medium, and it may be communication of two internal elements. For those skilled in the art, the specific meaning of the term in the present application can be understood according to specific conditions.

A term "and/or" in the present application is merely an association relationship describing associated objects, and indicates that there may be three relationships. For example, A and/or B may indicate three cases as below: A exists alone, A and B exist at the same time, and B exists alone. In addition, a character "/" in the present application generally indicates that former and later associated objects are in an "or" relationship.

In the embodiments of the present application, the same reference signs refer to the same component, and for the sake of being concise, a detailed description of the same component is omitted in different embodiments. It should be understood that dimensions such as thickness, length and width of various components in the embodiments of the present application shown in the drawings, and dimensions such as overall thickness, length and width of an integrated device are merely illustrative and should not limit the present application.

In the present application, "a plurality of" means more than two (including two).

In the present application, a battery refers to a single physical module that includes one or more battery cells to provide relatively high voltage and capacity. For example, the battery mentioned in the present application may include a battery module, a battery pack, or the like. Some batteries may include a case for encapsulating one or more battery cells or a plurality of battery modules. The case can prevent liquid or other impurity substance from affecting charging or discharging of the battery cell. Further, it is possible that some batteries may do not include the case and are directly arranged in a battery installation cabin of an electrical device.

In the present application, the battery cell may include a lithium-ion secondary battery, a lithium-ion primary battery, a lithium-sulfur battery, a sodium lithium-ion battery, a sodium-ion battery, a magnesium-ion battery, or the like, which is not limited in the embodiments of the present application. The battery cell may be a cylinder, a flat body, a cuboid, or other shapes, which is not limited in the embodiments of the present application. The battery cell is generally divided into three types based on a packaging manner, i.e., a cylindrical battery cell, a square battery cell, and a soft package battery cell, which is not limited in the embodiments of the present application.

For example, the battery cell may include a shell, an electrode assembly, and an electrolytic solution, and the shell is used to accommodate the electrode assembly and the electrolytic solution. The electrode assembly includes a positive electrode plate, a negative electrode plate, and a separator. The battery cell operates mainly based on movement of metal ions between the positive electrode plate and the negative electrode plate. The positive electrode plate includes a positive electrode current collector and a positive electrode active material layer, and the positive electrode active material layer is coated on a surface of the positive electrode current collector. A part of the positive electrode current collector that is not coated with the positive electrode active material layer protrudes from a part of the positive electrode current collector coated with the positive electrode active material layer, and the part of the positive electrode current collector that is not coated with the positive electrode active material layer is used as a positive tab. As taking a lithium-ion battery as an example, a material of the positive electrode current collector may be aluminum, and the positive electrode active material may be lithium cobalt oxide, lithium iron phosphate, ternary lithium, lithium manganate or the like.

The negative electrode plate includes a negative electrode current collector and a negative electrode active material layer, and the negative electrode active material layer is coated on a surface of the negative electrode current collector. A part of the negative electrode current collector that is not coated with the negative electrode active material layer protrudes from a part of the negative electrode current collector coated with the negative electrode active material layer, and the part of the negative electrode current collector that is not coated with the negative electrode active material layer is used as a negative tab. A material of the negative electrode current collector may be copper, and the negative electrode active material may be carbon, silicon or the like. In order to ensure that fusing is not occurred when a large current passes through, a plurality of the positive tabs is provided and stacked together, and a plurality of the negative tabs is provided and stacked together.

A material of the separator may be PP (polypropylene), PE (polyethylene) or the like. In addition, the electrode assembly may be a wound structure or a stacked structure, and the embodiments of the present application are not limited thereto.

The battery cell may be provided with an electrode terminal and the like, which is connected with the tab to serve as an electrical connection portion of the battery cell. Moreover, the battery cell may have a pressure relief portion. When an internal pressure of the battery cell is too large (for example, thermal runaway), the pressure relief portion is used for releasing internal substances (such as, gas, liquid, and particulate matters) of the battery cell, in order to reduce the internal pressure of the battery cell. This can avoid dangerous accidents such as deflagration of the battery cell caused by too fast pressurization inside the battery cell. For example, the pressure relief portion is an explosion-proof valve, an explosion-proof sheet and the like.

For example, in an electrical device of some related technologies, a battery is used for supplying power, the battery includes a casing and a battery cell, and the casing includes an upper casing and a lower casing. The battery cells are usually glued and fixed to the upper housing or the lower housing. In the usage process of the battery, the battery cell may expand, resulting in that the battery cell is prone to overpressure in a later stage of the usage to cause poor infiltration.

In order to solve the problem of the poor infiltration caused by the overpressure of the battery cell, the structure of the battery cell is improved in some related technologies to reduce the expansion of the battery cell in the using process. However, it is difficult in this manner, and it is not beneficial for the safety of the battery cell. In addition, in other related technologies, the expansion of the battery cell in the later stage is accommodated by increasing a gap of an initial state. However, this manner may easily cause wrinkles and bubble generation between electrode plates of the battery cell in an early stage to lead to lithium precipitation, and the battery cell is too loose to cause interface difference.

Based on this, the inventor provides a battery 1000, which includes a pressure applying component 20 and at least one battery module 10. The battery module 10 includes one layer of battery row 11 or a plurality of layers of battery rows 11 stacked in a first direction F1, the battery row 11 includes one battery cell 12 or a plurality of battery cells 12 arranged in a second direction F2, and the second direction F2 is perpendicular to the first direction F1. A housing 121 of the battery cell 12 includes a first surface 124 perpendicular to the first direction F1, and the first surface 124 is a surface of the housing 121 that has the largest area. The pressure applying component 20 is arranged on at least one side of the battery module 10 in the first direction F1 and abuts against the first surface 124 of the battery module 10, and a position of the pressure applying component 20 in the first direction F1 is adjustable.

In the battery 1000 having the above structure, the position of the pressure applying component 20 is adjustable in the first direction F1 in such a manner that the position of the pressure applying component 20 can be adjusted based on an operating duration of the battery 1000, an expansion state of the battery cell 12, etc., to cause the pressure applying component 20 to keep applying a suitable pressure on the battery module 10 during the operating process of the battery 1000. In this way, the battery cell 12 is not excessively pressurized to cause poor infiltration, and is not too loose to cause interface difference, thereby ensuring the performance and the service life of the battery cell 12.

The battery 1000 disclosed in the embodiment of the present application can be used in, but not limited to, an electrical device 2000 such as a vehicle, a ship, or an aircraft, such that the battery 1000 and the like disclosed in the present application can form a power supply system of the electrical device 2000 to ensure the performance and the service life of the electrical device 2000.

For example, the electrical device 2000 disclosed in the embodiment of the present application may be, but is not limited to, a vehicle, a mobile phone, a tablet, a notebook computer, a ship, a spacecraft, an electric toy, an electric tool, and the like. The vehicle may be a fuel vehicle, a gas vehicle, a new energy vehicle, or a rail vehicle. The new energy vehicle may be an electric vehicle, a hybrid electric vehicle, or an extended-range electric vehicle. The spacecraft includes an airplane, a rocket, an aircraft, a spaceship, and the like. The electric toy includes a fixed or movable electric toy, such as a game machine, an electric vehicle toy, an electric ship toy, and an electric plane toy. The electric tool includes an electric metal cutting tool, an electric grinding tool, an electric assembling tool, and an electric railway tool, such as an electric drill, an electric grinding machine, an electric wrench, an electric screwdriver, an electric hammer, an impact electric drill, a concrete vibrator, and an electric planer.

Hereinafter, the battery 1000 according to an embodiment of the present application is described with reference to the drawings.

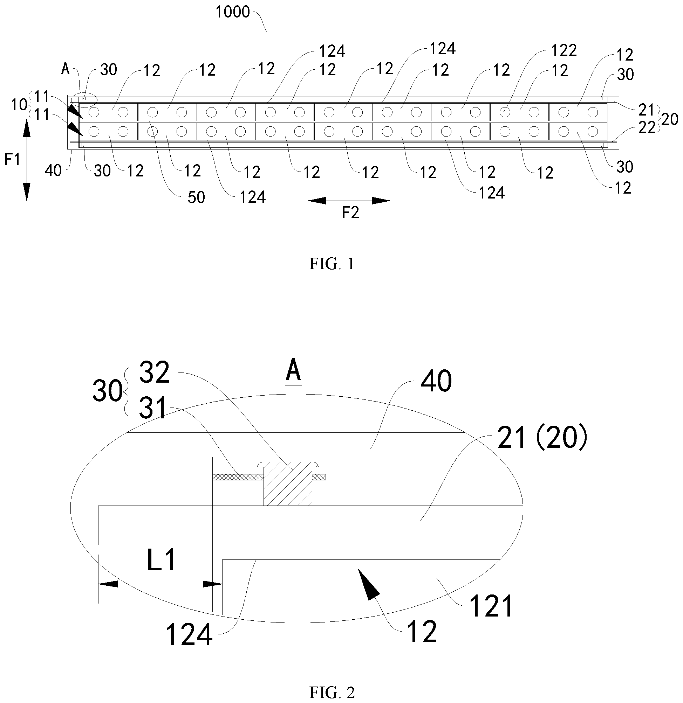

As shown in FIGS. 1 to 5, the battery 1000 includes a pressure applying component 20 and at least one battery module 10. The battery module 10 includes one layer of battery row 11 or a plurality of layers of battery rows 11 stacked in a first direction F1. The battery row 11 includes one battery cell 12 or a plurality of battery cells 12 arranged in a second direction F2, and the second direction F2 is perpendicular to the first direction F1. A housing 121 of the battery cell 12 includes a first surface 124 perpendicular to the first direction F1, and the first surface 124 is a surface of the housing 121 that has the largest area. The pressure applying component 20 is arranged on at least one side of the battery module 10 in the first direction F1 and abuts against the first surface 124 of the battery module 10, and a position of the pressure applying component 20 in the first direction F1 is adjustable.

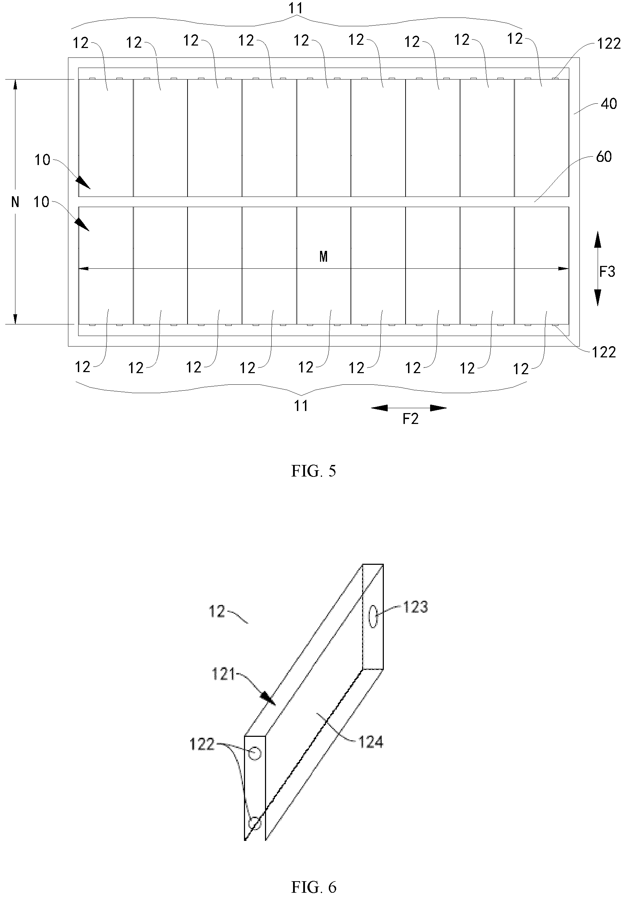

As shown in FIGS. 1 and 5, the battery module 10 includes one layer of battery row 11 or a plurality layers of battery rows 11 stacked in the first direction F1, and the battery row 11 includes one battery cell 12 or a plurality of battery cells 12 arranged in the second direction F2. For example, the battery module 10 may only include one battery cell 12, and the battery cell 12 forms one layer of battery row 11, thereby forming one battery module 10. In another example, the battery module 10 includes one layer of battery row 11, and the battery row 11 includes a plurality of battery cells 12 arranged in the second direction F2. In yet another example, the battery module 10 includes a plurality layers of battery rows 11 arranged in the first direction F1, and each layer of battery row 11 includes one battery cell 12. In further another example, the battery module 10 includes a plurality layers of battery rows 11 arranged in the first direction F1, and each layer of battery row 11 includes a plurality of battery cells 12 arranged in the second direction F2.

The number of layers of the battery rows 11 and the number of the battery cells 12 in the first direction F1 and the second direction F2 are adjustable, such that the battery module 10 can meet the requirements of different electric quantities and space dimensions.

As shown in FIGS. 1, 5 and 6, the housing 121 of the battery cell 12 includes the first surface 124 perpendicular to the first direction F1, and the first surface 124 is the surface of the housing 121 that has the largest area. In some embodiments, both side surfaces of the housing 121 of the battery cell 12 spaced apart along the first direction F1 are first surfaces 124, two side surfaces spaced apart along the second direction F2 are both second surfaces, two side surfaces spaced apart along the third direction F3 are both third surfaces, and the first direction F1, the second direction F2 and the third direction F3 are perpendicular to each other. An area of the first surface 124 is greater than an area of the second surface, and the area of the first surface 124 is greater than an area of the third surface. Thus, the first surface 124 is formed as a surface of the housing 121 having the largest area. It should be noted that a dimension relation between the second surface and the third surface can be flexibly configured. For example, the area of the second surface is greater than that of the third surface, or the area of the third surface is greater than that of the second surface, which are all within the scope of the present application.

Meanwhile, as shown in FIGS. 1 to 4, the pressure applying component 20 is a component capable of applying pressure to the battery module 10. The pressure applying component 20 is arranged on at least one side of the battery module 10 in the first direction F1, and the pressure applying component 20 abuts against the first surface 124 of the battery module 10. That is, the pressure applying component 20 is only disposed on a first side or a second side of the battery module 10 in the first direction F1, to abut against the first surface 124, exposed on the first side, of the battery cell 12 of the battery module 10, or to abut against the first surface 124, exposed on the second side, of the battery cell 12 of the battery module 10, thereby applying the pressure to the entire battery module 10. Alternatively, the pressure applying component 20 is dispose on the first side and the second side of the battery module 10 in the first direction F1, to abut against the first surface 124, exposed on the first side, of the battery cell 12 of the battery module 10, and to abut against the first surface 124, exposed on the second side, of the battery cell 12 of the battery module 10, thereby applying a pressure to the entire battery module 10.

The applying of pressure can avoid wrinkles and bubbles between the electrode plates in the battery cell 12 of the battery module 10 to avoid interface lithium precipitation.

Moreover, the position of the pressure applying component 20 in the first direction F1 is adjustable. In other words, in an initial state, an adjusting space is provided in the side surface of the battery module 10 that is provided with the pressure applying component 20, and the pressure applying component 20 is arranged in the adjusting space and is movable in the adjusting space in the first direction F1 to achieve position adjustment.

In the operating process of the battery 1000, the performance and expansion pressure of the battery cell 12 may change along with SOH (residual electric quantity percentage), such that the dimension of the battery cell 12 is changed, and the first surface 124 with the largest area is particularly prone to change. For example, the dimension of the battery cell 12 in the first direction F1 can be increased along with the use.

If the position of the pressure applying component 20 is not adjustable, as the dimension of the battery cell 12 in the first direction F1 increases, the pressure applied by the pressure applying component 20 to the battery module 10 increases, and the battery cell 12 is over-pressed to cause poor infiltration. The movement of the pressure applying component 20 in the first direction F1 can maintain the pressure applied by the pressure applying component 20 to the battery module 10 at a suitable pressing force. For example, the pressure is maintained within a preset range. Therefore, the situation where the battery cell 12 of the battery module 10 is over-pressed is avoided.

In addition, since the position of the pressure applying component 20 is adjustable, in the initial state of the battery 1000, that is, the battery 1000 is not used or in an initial stage of use, the pressure applying component 20 can apply a suitable pressing force to the battery 1000, and there is no need to reserve a relatively large gap. This can avoid the situation of interface difference due to being too loose caused by a too small pressure applied to the battery module 10 by the pressure applying component 20.

It should be noted that the position adjustment of the pressure applying component 20 in the first direction F1 can be automatically or manually performed. For example, in some embodiments, the battery 1000 includes a control assembly, and the control assembly automatically adjusts the position of the pressure applying component 20 based on at least one of parameters, such as the expansion force, the SOH, and the performance of the battery cell 12. In this way, the pressure applied by the pressure applying component 20 on the battery module 10 is maintained within the preset range. In another embodiment, the electrical device 2000 using the battery 1000 can be periodically maintained to test at least one of parameters such as the expansion force, the SOH, the performance, and the like of the battery cell 12. Thereafter the position of the pressure applying component 20 is manually adjusted based on a detection result, such that the pressure applied by the pressure applying component 20 on the battery module 10 is maintained within the preset range. Therefore, the pressure applying component 20 always applies a proper pressing force on the battery module 10 during the whole service life of the battery 1000.

When the battery module 10 includes a plurality of layers of battery rows 11 and the pressure applying component 20 is only provided on the first side or the second side, the pressure applying component 20 applies a pressure to the battery row 11 that is in direct contact with the pressure applying component 20 and an interaction is generated between two layers of battery rows 11. Accordingly, the pressure applying component 20 can indirectly apply a pressure to the battery rows 11 that is not in contact with the pressure applying component 20, such that the entire battery module 10 is tightly pressed by means of the pressure applying component 20.

In addition, when the pressure applying component 20 is arranged both on the first side and the second side, pressure is applied to the battery module 10 simultaneously on the both sides, such that the forces can be uniformly applied on the plurality of layers of battery row 11. When the position of the pressure applying component 20 is adjusted, the position can be adjusted at a side or can be adjusted simultaneously at two sides, such that the effect of position adjustment is improved.

With the battery 1000 according to the embodiment of the present application, the pressure applying component 20 is used to apply a pressure to the first surface 124 of the battery module 10 in the first direction F1 and the position of the pressure applying component 20 in the first direction F1 is adjustable, such that the pressure applying component 20 can always apply a suitable pressing force to the battery cell 12 in the battery module 10 during the entire service life of the battery module 10. This can prevent poor infiltration caused by overpressure of the battery cell 12 in the battery module 10, and can also avoid the interface difference caused by being too loose.

It should be noted that in the embodiments of the present application, the number of the first surfaces 124 may be one, or two or more.

For example, in some embodiments, a surface at an end of the battery cell 12 in the first direction F1 is the first surface 124, in other words, the battery cell 12 has only one first surface 124 with the largest area. In this embodiment, the expansion of the battery cell in the first direction F1 is less during the using process, and the pressure applying component 20 can apply a pressing force to the first surface 124. In this way, a required position adjustment stroke of the pressure applying component 20 is relatively short, such that the overall structure of the battery 1000 in the first direction F1 is more compact.

In another embodiment, each of two opposite surfaces of the battery cell 12 in the first direction F1 is the first surface 124. In other words, the battery cell 12 has two first surfaces 124, and the pressure applying component 20 can apply a pressing force to the two first surfaces 124 of the battery cell 12, to limit the expansion of the two first surfaces 124 at the same time, thereby preventing the battery cell 12 from being over-pressed or too loose with a simpler structure.

According to some embodiments of the present application, a thickness of the battery cell 12 in the first direction F1 is T, that is, a distance between the two first surfaces 124 of the battery cell 12 is T. An adjustable stroke of the pressure applying component 20 in the first direction F1 is H, where $1\% \leq T/H \leq 10\%$. For example, in some specific embodiments, T/H may be 1%, 2%, 4%, 6%, 8%, 10%, etc.

If T/H is too large, after the pressure applying component 20 is adjusted to a limit position in a direction away from the battery module 10, the risk of poor infiltration caused by an excessive expansion force and overpressure of the battery cell 12 still exists, especially for a battery module 10 with a relatively large number of layers of the battery rows 11. If T/H is too small, the reserved space of the side surface of the battery module 10 that is provided with the pressure applying component 20 is too large, thereby causing a volume of the battery 1000 to be too large.

In the above ratio range, on the premise of ensuring the pressing force adjustment requirement during the whole service life of the battery module 10, the reserved space is avoided from being too large, thereby making the structure of the battery 1000 more compact and facilitating to reduce the volume of the battery 1000.

Preferably, T and H meet $2\% \leq T/H \leq 5\%$, such as 2%, 2.5%, 3%, 3.5%, 4%, 4.5%, and 5%. In this way, the volume of the battery 1000 is reduced, and the effect of meeting the pressing force adjusting requirement is improved.

For example, in some embodiments, the pressure applying component 20 includes a pressing plate that is provided on a side of the battery module 10 in the first direction F1, and an adjustable stroke of the pressing plate is H. That is, the pressure applying component 20 applies a pressure to the battery module 10 only from a side of the battery module 10 in the first direction F1, to make a simple operation during the pressure adjusting process. For example, the pressing plate is arranged on an upper side of the battery module 10 and is operated from the upper side of the battery module 10 during the pressure adjusting process, such that interference of the battery module 10 on pressure adjustment is avoided.

In another example, in some embodiments, as shown in FIG. 1, the pressure applying component 20 includes a first pressing plate 21 and a second pressing plate 22. The first pressing plate 21 and the second pressing plate 22 are respectively arranged on two sides of the battery module 10, and a sum of adjustable strokes of the first pressing plate 21 and the second pressing plate 22 is H. That is to say, positions of the first pressing plate 21 and the second pressing plate 22 can be respectively adjusted in the first direction F1, and during the adjusting process, it is possible to adjust the first pressing plate 21 or the second pressing plate 22, or to adjust both the first pressing plate 21 and the second pressing plate 22 in accordance with requirements, such that the adjustment is more flexible.

In some embodiments of the present application, a projection area of the pressure applying component 20 in the first direction F1 is S. A distance between two side surfaces of at least one battery module 10 that are located on an outermost side in the second direction F2 is M, and a distance between two side surfaces thereof located on an outermost side in the third direction F3 is N. The first direction F1 and the second direction F2 are both perpendicular to the third direction F3, where $100\% \leq S/(M \times N) \leq 110\%$, such as 100%, 102%, 104%, 106%, 108%, and 110%.

As shown in FIG. 5, the distance between the two side surfaces of the at least one battery module 10 that are located on the outermost side in the second direction F2 is M, and the distance between the two side surfaces thereof located on the outermost side in the third direction F3 is N. Herein, the "at least one battery module 10" refers to all battery modules 10 included in the battery 1000. That is, when the battery includes only one battery module 10, "at least one battery module 10" refers to the one battery module 10, or when the battery includes a plurality of the battery modules 10, "at least one battery module 10" refers to the plurality of the battery modules 10.

"The distance between two side surfaces located on the outermost side in the second direction F2 is M and the distance between two side surfaces located on the outermost side in the third direction F3 is N" means that the distance between two side surfaces of each of all battery modules 10 located on the outermost side in the second direction F2 is M, and the distance between two side surfaces of each of all battery modules 10 located on the outermost side in the third direction F3 is N. In other words, projections of all the battery modules 10 in the first direction F1 fall within a virtual square frame, the virtual square frame extends along a peripheral of the projections, and dimensions of two adjacent edges of the virtual square frame are M and N.

As shown in FIGS. 1 and 5, taking a case where the battery 1000 includes two battery modules 10 as an example, the two battery modules 10 may be arranged in the third direction F3, and each of the battery modules 10 includes nine battery cells 12 arranged in the second direction F2. In the nine battery cells 12, a distance between two surfaces of the two battery cells 12 located at two ends in the second direction F2 is M, in which the two surfaces face away from each other. The nine battery cells 12 may be tightly attached to each other or spaced apart by a certain gap. A distance between two surfaces of the two battery modules 10 facing away from each other in the first direction F1 is N, and the two battery rows 11 may be tightly attached to each other or spaced apart by a certain gap.

M×N is a product of M and N, i.e., an area of a region enclosed by the virtual square frame.

A ratio of S to M×N is in the above value range, which is beneficial for the pressure applying component 20 to apply a pressing force to all the battery modules 10 of the battery 1000, thereby ensuring the performance of the battery module 10 with a simpler structure. Meanwhile, the area of the pressure applying component 20 can be avoided to be too large so that the space occupied by the pressure applying component 20 in the second direction F2 and the third direction F3 can be avoided to be too large, thereby preventing the volume of the battery 1000 from being too large.

In some embodiments of the present application, as shown in FIG. 2, in the second direction F2, a dimension of an edge of the pressure applying component 20 extending beyond an edge of the at least one battery module 10 is L1. In the third direction F3, a dimension of an edge of the pressure applying component 20 extending beyond an edge of the at least one battery module 10 is L2. The first direction F1 and the second direction F2 are both perpendicular to the third direction F3, 3 mm ≤ L1 ≤ 10 mm, and 3 mm ≤ L2 ≤ 10 mm.

"At least one battery module 10" herein refers to all the battery modules 10 included in the battery 1000. That is, when the battery includes only one battery module 10, "at least one battery module 10" refers to the one battery module 10, or when the battery includes a plurality of the battery modules 10, "at least one battery module 10" refers to the plurality of the battery modules 10.

In the second direction F2, the dimension of the edge of the pressure applying component 20 extending beyond the edge of the at least one battery module 10 is L1. That is, the projections of all the battery modules 10 in the first direction F1 fall within the virtual square frame, and the virtual square frame extends along the peripheral of the projections of all the battery modules 10. A portion of the projection of the pressure applying component 20 in the first direction F1 does not fall within the virtual square frame, the unfallen portion is located on a side surface of the virtual direction along the second direction F2, and a dimension of the unfallen portion in the second direction F2 is L1.

In the third direction F3, the dimension of the edge of the pressure applying component 20 extending beyond the edge of the at least one battery module 10 is L2. That is, a portion of the projection of the pressure applying component 20 in the first direction F1 does not fall within the virtual square frame, the unfallen portion is located on a side surface of the virtual square frame in the third direction F3, and a dimension of the unfallen portion in the third direction F3 is L2.

L1 and L2 satisfy 3 mm ≤ L1 ≤ 10 mm and 3 mm ≤ L2 ≤ 10 mm. For example, L1 may be 3 mm, 4 mm, 5 mm, 6 mm, 7 mm, 8 mm, 9 mm, 10 mm and etc., L2 may be 3 mm, 4 mm, 5 mm, 6 mm, 7 mm, 8 mm, 9 mm, 10 mm and etc., and L1 and L2 may be equal or different. If the exceeding dimension is too small, the requirement for mounting precision of the pressing plate is high, and the pressing plate cannot uniformly apply a pressure to the whole region of the battery module 10 due to dislocation. If the exceeding dimension is too large, the occupied space is large, which is not beneficial for miniaturization of the battery 1000. In the above dimension range, it is beneficial for the pressure applying component 20 to apply a pressing force to all the battery modules 10 of the battery 1000 to avoid the influence of installation errors. Meanwhile, the area of the pressure applying component 20 can be avoided to be too large so that the space occupied by the pressure applying component 20 in the second direction F2 and the third direction F3 can be avoided to be too large, thereby preventing the volume of the battery 1000 from being too large.

According to some embodiments of the present application, as shown in FIGS. 1 to 5, the battery 1000 further includes a case 40 and at least one adjusting component 30. The battery module 10 and the pressure applying component 20 are located in the case 40. The adjusting component 30 is arranged on a side of the pressure applying component 20 facing away from the battery module 10, and includes a fixing portion 31 and a movable portion 32. The fixing portion 31 is installed to the case 40, and the movable portion 32 abuts against the pressure applying component 20 and is movably installed to the fixing portion 31 in the first direction F1.

The case 40 provides a stable space for normal operation of the battery module 10. Optionally, the case 40 may include an upper casing and a lower casing, the upper casing is engaged with the lower casing to define a sealed space, and the battery module 10 and the pressure applying component 20 are arranged in the sealed space. In another embodiment, the case 40 includes a lower casing, and the pressure applying component 20 covers a top opening of the lower casing, such that the lower casing and the pressure applying component 20 define a sealed space and the battery module 10 is located in the sealed space.

At least one adjusting component 30 is provided, that is, the adjusting component 30 may be one, to simplify the structure and reduce the cost. In an embodiment, a plurality of the adjusting components 30 is provided, such that the forces applied to various regions of the pressure applying component 20 are uniform and stability of driving the pressure applying component 20 to move is improved. The adjusting component 30 is disposed on a side of the pressure applying component 20 facing away from the battery module 10, such that the movable portion 32 abuts against a surface of the pressure applying component 20 facing away from the battery module 10.

As shown in FIGS. 2 to 4, the fixing portion 31 is a portion that does not move in a process of adjusting the pressing force, and the fixing portion 31 is used for mounting the adjusting component 30. For example, the fixing portion 31 may be mounted at the upper casing, a bottom wall of the lower casing, or a sidewall of the lower casing.

The movable portion 32 refers to a portion that is required to move in the process of adjusting the pressing force. The movable portion 32 is configured to abut against the pressure applying component 20, to adjust a distance between the movable portion 32 and the battery module 10 with the movement of the movable portion 32, so as to adjust the pressure applied by the movable portion 32 on the pressure applying component 20 and to further adjust the pressure applied by the pressure applying component 20 on the battery module 10. The movement of the movable portion 32 can make the position adjustment of the pressure applying component 20 more convenient, and there is no need to reserve an operation space at an outer side of the edge of the pressure applying component 20. Accordingly, the structure is more compact.

Specific structures and a fitting manner of the fixing portion 31 and the movable portion 32 can be flexibly configured.

In some embodiments, as shown in FIG. 2, the fixing portion 31 is in threaded fit with the movable portion 32. For example, the movable portion 32 is a bolt. The movable portion 32 moves relative to the fixing portion 31 in the first direction F1 by screwing the movable portion 32, and a movement distance can be accurately controlled by controlling the number of screwing turns to accurately control the adjusting precision of the pressing force.

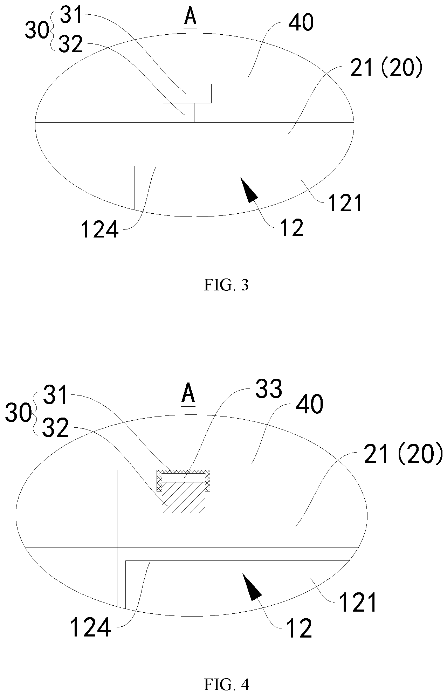

In some embodiments, as shown in FIG. 3, the fixing portion 31 is a motor, and the movable portion 32 is a telescopic rod. The motor can drive the telescopic rod to stretch and retract in the first direction F1 so that the adjustment of the pressing force is achieved, the driving of the motor is more sensitive and accurate, and it facilitates to achieve automatic adjustment.

In some embodiments, as shown in FIG. 4, the fixing portion 31 has an air pressure chamber 33, and an air pressure in the air pressure chamber 33 is adjustable. The movable portion 32 extends into the air pressure chamber 33 and is movable under driving of the air pressure. For example, when the air pressure in the air pressure chamber 33 is increased, the movable member can be driven to move in a direction close to the pressure applying component 20, to increase the pressing force applied by the pressure applying component 20 on the battery module 10. When the air pressure in the air pressure chamber 33 is reduced, the movable member can be driven to move in a direction away from the pressure applying component 20, to reduce the pressing force applied by the pressure applying component 20 on the battery module 10. For example, the air pressure in the air pressure chamber 33 can be adjusted by a pump. The adjusting manner of the air pressure can achieve continuously adjusting of the position of the movable portion 32, and the adjusting precision of the pressing force is improved.

According to some embodiments of the present application, as shown in FIG. 1, there are a plurality of adjusting components 30 arranged at intervals in a circumferential direction of the pressure applying component 20 and is engaged with a periphery of the pressure applying component 20. Therefore, the plurality of adjusting components 30 abuts against the pressure applying component 20 from a plurality of point positions to limit the position of the pressure applying component. The volume of each of the adjusting components 30 can be relatively small to make the adjustment easier, and the forces applied to each part of the pressure applying component 20 is uniform, such that the force applied to the plurality of battery cells 12 of the battery module 10 is uniform.

In some specific embodiments, as shown in FIG. 1, the pressure applying component 20 includes the first pressing plate 21 and the second pressing plate 22, and the first pressing plate 21 and the second pressing plate 22 are both in a square shape and are respectively arranged on the upper side and the lower side of the battery module 10. Four adjusting components 30 are provided on an upper side of the first pressing plate 21, and abut against four corners of the first pressing plate 21, respectively. Four adjusting components 30 are provided on a lower side of the second pressing plate 22, and abut against four corners of the second pressing plate 22, respectively. Alternatively, the second pressing plate 22 may be omitted, the battery module 10 is directly supported on the bottom wall of the lower casing, and it is only required to provide four adjusting components 30 engaged with the first pressing plate 21.

In some embodiments of the present application, as shown in FIG. 1, the battery 1000 further includes a supporting structure 50. The supporting structure 50 is provided between two adjacent layers of battery rows 11 and engaged with the battery rows 11.

The supporting structure 50 can separate and support the two adjacent layers of battery rows 11, thereby improving the overall structural strength of the battery module 10 and the stability. Moreover, the supporting structure 50 may be any structure such as a supporting plate and a supporting column. In an embodiment where the supporting structure 50 is a supporting plate, the supporting plate can achieve a good supporting and position-limiting effect on the plurality of battery cells 12 of the battery module 10. Further, a heat insulation effect can be achieved under a condition that the supporting plate is of a heat insulation material, to prevent heat sprayed during the thermal runaway from rapidly diffusing to the adjacent battery row 11 to improve the safety of the battery 1000.

In some embodiments, a thickness of the supporting structure 50 in the first direction F1 ranges from 1 mm to 8 mm. If the thickness of the supporting structure 50 is too thin, the structural strength of the supporting structure 50 is weak, and an effect of improving the overall structural strength of the battery module 10 is not significant. If the thickness of the supporting structure 50 is too thick, the excessive space is occupied, which is not beneficial to reduce the volume and cost of the battery 1000. In the above dimension range, on the premise that the structural strength requirement is guaranteed, the structure of the battery module 10 is more compact, which is beneficial to reduce the volume of the battery 1000.

In some embodiments, the supporting structure 50 is connected to the battery row 11. For example, the supporting structure and the battery row may be connected to each other through a connecting manner such as an adhesive layer (a structural adhesive), welding, and fastener connection, to further improve the effect of improving the structural strength of the battery row 11 through the supporting structure 50. In some specific embodiments, the battery row 11 includes a plurality of the battery cells 12, and the supporting structure 50 is connected to the plurality of battery cells 12, thereby connecting the plurality of battery cells 12 into one piece to further improve the rigidity of the battery row 11.

In some embodiments, the supporting structure 50 includes at least one of a thermal insulation layer, a buffer portion, or a heat exchange channel.

The heat insulation layer is a material layer made of a heat insulation material, and has a relatively low heat conductivity coefficient, such that the heat insulation effect can be achieved. The heat insulation layer is provided so that the effect of preventing heat diffusion can be further improved and the effect of avoiding a thermal runaway reaction is better.

An interior of the heat exchange channel is used for containing a heat exchange medium, and the heat exchange medium may be liquid (such as, water and a mixed liquid of water and ethylene glycol), gas (such as, air), solid-liquid phase change material or the like. The supporting structure 50 and the adjacent battery cell 12 are in heat conduction connection. For example, the supporting structure and the adjacent battery cell may be in direct contact connection, or be connected through a heat conduction pad, a heat conduction adhesive, and the like, to enhance the heat conduction performance. The supporting structure 50 having the heat exchange channel can adjust the temperature of the battery cell 12, carry out cooling and heat dissipation on the battery cell 12, and carry out heating and temperature rising on the battery cell 12, all of which are within the scope of the present application. The present embodiment is described below by taking a case where heat dissipation is carried out on the battery cell 12 as an example, and an operating process of carrying out heating and temperature rising on the battery cell 12 can be understood based on the following description. Heat generated in the operating process of the battery cell 12 can be transferred to the supporting structure 50 and is then transferred outside through the heat exchange medium in the heat exchange channel, to achieve heat dissipation of the battery cell 12.

The buffer portion refers to a structure capable of achieving a buffering effect. For example, the buffer portion has a buffering function through deformation so that the damage to the battery cell 12 is reduced when impact occurs. For example, when the impact occurs in the first direction F1, the battery cell 12 squeezes the buffer portion to reduce the impact force applied to the battery cell 12. In addition, when an expansion force changes during the using process of the battery cell 12, a pressure can be applied to the buffer portion to deform the buffer portion so as to adjust the pressing force on the battery cell 12, such that the battery cell 12 is not over-pressed.

For example, the buffer portion may include a buffer material layer, and/or the buffer portion may include a hollow cavity formed in the supporting structure 50.

The buffer material layer may be a material layer attached to a surface of the supporting structure 50, for example, it is made of an elastic material such as rubber and silica gel. When being subjected to an extrusion force, the buffer material layer is deformed to perform a buffering function.

The buffer portion can include a hollow cavity arranged in the supporting structure 50, such that the supporting structure 50 can be deformed when being squeezed, to reduce a volume of the hollow cavity, thereby achieving a buffering function. For example, the hollow cavity may be an integrated cavity having a relatively large area, or may include a plurality of small cavities spaced apart from each other to form a similar honeycomb shape, all of which are within the scope of the present application.

Therefore, the supporting structure 50 and at least one of the heat insulation layer, the buffer portion and the heat exchange channel are formed integrally, and the functions are more diversified.

According to some embodiments of the present application, as shown in FIG. 5, there may be provided with a plurality of battery modules 10, the plurality of battery modules 10 are arranged in the third direction F3, and the first direction F1 and the second direction F2 are both perpendicular to the third direction F3. Therefore, a dimension of the battery 1000 in a three-dimensional space can be adjusted by adjusting the number of the battery modules 10, the number of the battery rows 11 included in the battery module 10, and the number of the battery cells 12 included in the battery row 11, to satisfy requirements of different mounting spaces and different electric quantities.

In some embodiments, the pressure applying component 20 abuts against the first surfaces 124 of the plurality of battery modules 10. That is to say, the plurality of battery modules 10 is subjected to the pressing force adjustment by the same pressure applying component 20. In this way, in one aspect, the number of the pressure applying components 20 can be reduced and the structure is simplified, and in another aspect, consistency of the pressing force adjustment of the plurality of battery modules 10 can be high and the overall performance of the battery 1000 is improved.

According to some embodiments of the present application, as shown in FIG. 5, the battery 1000 further includes a reinforcing structure 60. The reinforcing structure 60 extends in the second direction F2, and the reinforcing structure 60 is provided between two adjacent battery modules 10 and is engaged with the battery modules 10.

The reinforcing structure 60 can function to reinforce the structure, and to support and limit the position of the two adjacent battery modules 10, such that the structural strength of the whole battery 1000 is improved. For example, the two adjacent battery modules 10 are both connected with the reinforcing structure 60, to further improve the structural strength. For example, the reinforcing structure 60 may be a structure, such as a reinforcing plate and a beam.

In some embodiments, the reinforcing structure 60 may have at least one of a thermal insulation layer, a buffer portion, or a heat exchange channel. Specific structures of the heat insulation layer, the buffer portion and the heat exchange channel are similar to those of the heat insulation layer, the buffer portion, and the heat exchange channel of the supporting structure 50, and details are not described herein again.

In some embodiments, as shown in FIG. 6, a surface of the battery cell 12 facing toward the reinforcing structure 60 is provided with a pressure relief portion 123.

When an internal pressure of the battery cell 12 is too large, for example, thermal runaway, the pressure relief portion 123 is used for releasing internal substances (such as, gas, liquid, particulate matter) of the battery cell 12, to reduce the internal pressure of the battery cell 12 to avoid dangerous accidents such as deflagration of the battery cell 12 due to too fast pressurization inside the battery cell 12. For example, the pressure relief portion 123 may be an explosion-proof valve, an explosion-proof sheet, and the like.

The pressure relief portion 123 is disposed on the surface facing toward the reinforcing structure 60 so that the released high-temperature substances are sprayed to the reinforcing structure 60 and cannot be directly sprayed to the adjacent battery cell 12 in the same battery module 10 or the battery cell 12 of the adjacent battery module 10. Accordingly, the released high-temperature substances can be prevented from being directly sprayed to the electrical connection portion 122 of the battery cell 12, such that problems of insulation failure, high-pressure ignition, fire explosion initiation and the like are prevented.

In some embodiments, the reinforcing structure 60 is provided with a flame-retardant portion opposite to the pressure relief portion 123. The flame-retardant portion is a structure with a flame-retardant function. For example, the flame-retardant portion may be made of a flame-retardant material or a heat insulation material. When high-temperature substances are sprayed by the pressure relief portion 123 during the thermal runaway, the flame-retardant portion can quickly prevent combustion to avoid thermal diffusion. For example, the material of the flame-retardant portion may be cement, steel, glass, and the like.

In some embodiments, the reinforcing structure 60 is provided with a recess facing toward the pressure relief portion 123. The recess is provided in such a manner that a gap is formed between the reinforcing structure 60 and the pressure relief portion 123, to avoid that the pressure relief portion 123 is blocked by the reinforcing structure 60 and thus cannot spray substances inside the battery cell 12 in time during the thermal runaway, thereby avoiding dangerous accidents such as explosion caused by overlarge internal pressure of the battery cell 12. For example, the recess may be a recess formed in the reinforcing structure 60 or a through hole formed in the reinforcing structure 60. An exhaust channel communicated with the through hole may be further formed in the reinforcing structure 60, to prevent the high-temperature substances discharged by the pressure relief portion 123 from entering the chamber where the battery module 10 is located, thereby further improving the safety.

In some embodiments of the present application, the housing 121 of the battery cell 12 is provided with a pressure relief portion 123, and a wall thickness of the sidewall of the housing 121 provided with the pressure relief portion 123 ranges from 0.8 mm to 3 mm. For example, the wall thickness may be 0.8 mm, 1 mm, 1.2 mm, 1.5 mm, 2 mm, 2.5 mm, 3 mm, etc. If the wall thickness of the sidewall of the housing 121 is too thick, the cost is high and the pressure relief is not timely. If the wall thickness of the sidewall of the housing 121 is too thin, the sidewall is prone to be deformed, and the structure of the housing 121 and the mounting structure of the pressure relief portion 123 are unstable. In the above wall thickness range, the structures of the housing 121 and the pressure relief portion 123 are stable, the installation is stable, the pressure relief portion 123 is good in consistency, and the pressure relief timeliness and low cost are both satisfied to avoid explosion.

Preferably, the wall thickness of the sidewall of the housing 121 provided with the pressure relief portion 123 ranges from 1.5 mm to 2 mm. For example, the wall thickness may be 1.5 mm, 1.6 mm, 1.7 mm, 1.8 mm, 1.9 mm, 2 mm, etc. Accordingly, the structural stability and the pressure relief effect are further improved.

In an embodiment where the housing 121 is provided with the pressure relief portion 123, the specific structure of the pressure relief portion 123 can be flexibly configured.

In some embodiments, the pressure relief portion 123 is a thinned region disposed on the housing 121. The thinned region may be obtained by thinning the housing 121, for example, the pressure relief portion 123 can be directly formed on the housing 121 through indentation, which is beneficial to simplify the structure. When the internal pressure of the battery cell 12 is increased, the thinned region is relatively low in thickness and relatively low in strength such that the thinned region is broken before other regions of the housing 121. In this way, the internal high-temperature gas can be discharged along a required path to realize pressure relief.

In some other embodiments, the pressure relief portion 123 is a pressure relief valve mounted on the sidewall of the housing 121. In other words, the pressure relief portion 123 and the housing 121 are separate members that are connected to each other, such that the processing of the pressure relief portion 123 is easier and it is easier to control the pressure relief effect. For example, the pressure relief valve and the sidewall of the housing 121 may be welded to be connected to each other.

According to some embodiments of the present application, the housing 121 of the battery cell 12 is provided with the pressure relief portion 123 and the electrical connection portion 122, and the pressure relief portion 123 and the electrical connection portion 122 are arranged on different sides of the housing 121.

The pressure relief portion 123 and the electrical connection portion 122 are arranged on different sides of the housing 121 of the battery cell 12. It is beneficial to ensure that there is a relatively large spacing between the electrical connection portion 122 and the pressure relief portion 123 of the battery cell 12, to effectively avoid problems of insulation failure, high-pressure ignition, initiation of fire explosion and the like caused by the fact that conductive particles in emissions discharged by the battery cell 12 through its own pressure relief portion 123 flow to its own electrical connection portion 122 under conditions of thermal runaway and the like.

In some embodiments, as shown in FIG. 6, the electrical connection portion 122 and the pressure relief portion 123 are disposed on two side surfaces of the battery cell 12 opposite to each other, respectively. Therefore, the distance between the electrical connection portion 122 and the pressure relief portion 123 can be further increased, to ensure that the electrical connection portion 122 is prevented from being influenced by the emissions discharged by the pressure relief portion 123, that is, probability of being influenced is less, and the using safety and reliability of the battery 1000 are better.

Moreover, as shown in FIG. 1 and FIG. 5, in an embodiment where the plurality of the battery modules 10 and the reinforcing structure 60 are included, the electrical connection portion 122 and the pressure relief portion 123 may be provided on two side surfaces of the battery cell 12 spaced apart from each other in the third direction F3, such that the pressure relief portion 123 is opposite to the reinforcing structure 60. The electrical connection portion 122 is located on a surface facing away from the reinforcing structure 60, with facilitates the electrical connection among the plurality of battery cells 12 and the plurality of battery rows 11. Further, the pressure relief portions 123 of all the battery cells 12 in the same battery row 11 neither spray toward any electrical connection portion 122 in the battery row 11 nor spray toward any electrical connection portion 122 of the adjacent battery row 11 of the same battery module 10, and do not spray toward any electrical connection portion 122 of the adjacent battery module 10, thereby effectively ensuring the electrical connection part 122 of each battery cell 12 from being affected by emissions discharged from other battery cells 12. This can ensure the using safety and reliability of the battery 1000.

In some specific embodiments, as shown in FIG. 6, the housing 121 includes a shell, a first cover, and a second cover. The first cover and the second cover respectively cover end portions of the shell in a covering mode. The first cover is provided with an electrical connection portion 122, and the second cover is provided with a pressure relief portion 123. That is, the shell is a structure with four sidewalls, and the first cover and the second cover respectively cover and enclose two open side surfaces of the shell, in such a manner that the housing 121 is formed into an enclosed structure.

In a production process, the first and second covers and the shell are all separate members. The electrical connection portion 122 is installed on the first cover firstly, and the pressure relief portion 123 is installed on the second cover. Thereafter the first cover is connected with the shell, and the second cover is connected with the shell, for example, through welding connection. Therefore, the process of installing the electrical connection portion 122 and the pressure relief portion 123 does not interfere with the shell, thereby making the installation operation easier.

An electrical device 2000 according to an embodiment of the second aspect of the present application includes the battery 1000 according to the embodiments of the first aspect of the present application, and the battery 1000 is configured to provide electric energy to the electrical device 2000. Therefore, the above battery 1000 is used to improve the using safety and reliability of the electrical device 2000.

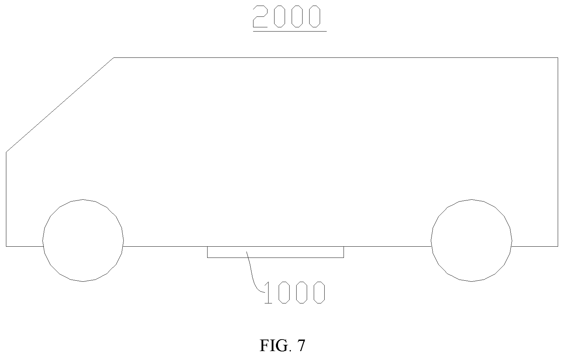

Optionally, as shown in FIG. 7, when the battery 1000 is used in a vehicle, the battery 1000 may be disposed at bottom, head, or tail of the vehicle. The battery 1000 may be used for power supply of the vehicle, for example, the battery 1000 may be used as an operating power source for the vehicle. The vehicle may include a controller and a motor, and the controller is used for controlling the battery 1000 to supply power to the motor, for example, to provide operating power demands during starting, navigating, and driving of the vehicle.

It should be noted that, in the case of no conflict, the embodiments in the present application and the features in the embodiments can be combined with each other.

The above description is only the preferred embodiments of the present application and not used for limiting the present application, and it is apparent for those skilled in the art that the present application can have various changes and modifies. Any modification, equivalent replacement, improvement, and the like made within the spirit and principle of the present application should be included within the scope of the present application.

**Claims**

1. A battery (1000), comprising:

   at least one battery module (10) comprising one layer of battery row (11) or a plurality of layers of battery rows (11) stacked in a first direction (F1), the battery row (11) comprising one battery cell (12) or a plurality of battery cells (12) arranged in a second direction (F2), the second direction (F2) being perpendicular to the first direction (F1), the battery cell (12) having a housing (121), the housing (121) comprising a first surface (124) perpendicular to the first direction (F1), and the first surface (124) being a surface of the housing (121) having the largest area; and
   a pressure applying component (20) provided on at least one side of the at least one battery module (10) in the first direction (F1), the pressure applying component (20) abutting against the first surface (124) of the at least one battery module (10), and a position of the pressure applying component (20) in the first direction (F1) being adjustable.

2. The battery (1000) according to claim 1, wherein:

   a surface at an end of the battery cell (12) in the first direction (F1) is the first surface (124); or each of two opposite surfaces of the battery cell (12) in the first direction (F1) is the first surfaces (124).

3. The battery (1000) according to claim 1, wherein a thickness of the battery cell (12) in the first direction (F1) is T, and an adjustable stroke of the pressure applying component (20) in the first direction (F1) is H, where $1\% \leq T/H \leq 10\%$.

4. The battery (1000) according to any one of claims 1 to 3, wherein:

   the pressure applying component (20) comprises a pressing plate provided on a side of the at least one battery module (10) in the first direction (F1), and an adjustable stroke of the pressing plate being H; or
   the pressure applying component (20) comprises a first pressing plate (21) and a second pressing plate (22) that are respectively arranged on two sides of the at least one battery module (10), a total adjustable stroke of the first pressing plate (21) and the second pressing plate (22) being H.

5. The battery (1000) according to any one of claims 1 to 4, wherein:

   an area of a projection of the pressure applying component (20) in the first direction (F1) is S; a distance between two side surfaces of the at least one battery module (10) that are located on outermost sides in the second direction (F2) is M, a distance between two side surfaces of the at least one battery module (10) that are located on outermost sides in a third direction (F3) is N, the first direction (F1) and the second direction (F2) being both perpendicular to the third direction (F3), where

   $$100\% \leq S/(M{\times}N) \leq 110\%.$$

6. The battery (1000) according to any one of claims 1 to 5, wherein:

in the second direction (F2), a dimension of an edge of the pressure applying component (20) extending beyond an edge of the at least one battery module (10) is L1; and

in a third direction (F3), a dimension of an edge of the pressure applying component (20) extending beyond an edge of the at least one battery module (10) is L2, the first direction (F1) and the second direction (F2) being both perpendicular to the third direction (F3),

where 3 mm ≤ L1 ≤ 10 mm, and 3 mm ≤ L2 ≤ 10 mm.

7. The battery (1000) according to any one of claims 1 to 6, further comprising:

a case (40), the at least one battery module (10) and the pressure applying component (20) being located in the case (40); and

at least one adjusting component (30) provided on a side of the pressure applying component (20) facing away from the at least one battery module (10),

wherein the at least one adjusting component (30) comprises a fixing portion (31) and a movable portion (32), the fixing portion (31) being mounted to the case (40), and the movable portion (32) abutting against the pressure applying component (20) and being movably mounted to the fixing portion (31) in the first direction (F1).

8. The battery (1000) according to claim 7, wherein:

the fixing portion (31) is in threaded fit with the movable portion (32); or

the fixing portion (31) is a motor, and the movable portion (32) is a telescopic rod; or

the fixing portion (31) has an air pressure chamber, an air pressure in the air pressure chamber being adjustable, and the movable portion (32) extending into the air pressure chamber and being movable under driving of the air pressure.

9. The battery (1000) according to claim 7 or 8, wherein the at least one adjusting component (30) comprises a plurality of adjusting components (30) arranged at intervals in a circumferential direction of the pressure applying component (20) and engaged with a periphery of the pressure applying component (20).

10. The battery (1000) according to any one of claims 1 to 9, further comprising a supporting structure (50) provided between two adjacent layers of the battery rows (11) and engaged with the two adjacent layers of the battery rows (11).

11. The battery (1000) according to claim 10, wherein a thickness of the supporting structure (50) in the first direction (F1) ranges from 1 mm to 8 mm.

12. The battery (1000) according to claim 10 or 11, wherein the supporting structure (50) is connected to the two adjacent layers of the battery row (11).

13. The battery (1000) according to any one of claims 10 to 12, wherein the supporting structure (50) comprises at least one of a thermal insulation layer, a buffer portion, and a heat exchange channel.

14. The battery (1000) according to any one of claims 1 to 13, wherein the at least one battery module (10) comprises a plurality of the battery modules (10) arranged in a third direction (F3), the first direction (F1) and the second direction (F2) being both perpendicular to the third direction (F3).

15. The battery (1000) according to claim 14, wherein the pressure applying component (20) abuts against the first surfaces (124) of the plurality of battery modules (10).

16. The battery (1000) according to claim 14 or 15, further comprising a reinforcing structure (60) extending along the second direction (F2), the reinforcing structure (60) being provided between two adjacent battery modules of the plurality of battery modules (10) and engaged with the two adjacent battery modules (10).

17. The battery (1000) according to claim 16, wherein the battery cell (12) is provided with a pressure relief portion (123) on a surface of the battery cell (12) facing toward the reinforcing structure (60).

18. The battery (1000) according to claim 17, wherein the reinforcing structure (60) is provided with a flame-retardant portion opposite to the pressure relief portion (123).

19. The battery (1000) according to claim 17 or 18, wherein the reinforcing structure (60) is provided with a recess facing toward the pressure relief portion (123).

20. The battery (1000) according to any one of claims 1 to 19, wherein the housing (121) is provided with a pressure relief portion (123) at a sidewall of the housing (121), and a wall thickness of the sidewall of the housing (121) ranges from 0.8 mm to 3 mm.

21. The battery (1000) according to any one of claims 1 to 20, wherein the housing (121) is provided with a pressure relief portion (123), the pressure relief portion (123) being a thinned region provided on the housing (121) or a pressure relief valve mounted on a sidewall of the housing (121).

22. The battery (1000) according to any one of claims 1 to 21, wherein the housing (121) of the battery cell (12) is provided with a pressure relief portion (123) and an electrical connection portion (122), the pressure relief portion (123) and the electrical connection portion (122) being arranged on different sides of the housing (121).

23. The battery (1000) according to any one of claims 1 to 22, wherein the housing (121) comprises a shell, a first cover, and a second cover, the first cover and the second cover respectively covering ends of the shell, the first cover being provided with an electrical connection portion (122), and the second cover being provided with a pressure relief portion (123).

24. An electrical device (2000), comprising the battery (1000) according to any one of claims 1 to 23, wherein the battery (1000) is configured to provide electric energy to the electrical device (2000).

FIG. 1

FIG. 2

FIG. 3

FIG. 4

FIG. 5

FIG. 6

2000

1000

FIG. 7

# INTERNATIONAL SEARCH REPORT

| | International application No. |
|---|---|
| | **PCT/CN2022/127966** |

**A. CLASSIFICATION OF SUBJECT MATTER**

H01M50/204(2021.01)i; H01M50/262(2021.01)i; H01M50/267(2021.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN; CNABS; CNTXT; WOTXT; EPTXT; USTXT; CNKI; IEEE: 电池, 加压, 施加, 压力, 调整, 调节, 移动, 伸缩, 活动, 膨胀, 尺寸, 空间, 体积, 高度, 抵接, 加紧, 夹紧, 紧固, batter+, cell?, pressur+, adjust+, mov+, expand+, size, space, volume, height, tighten+, clamp+, fasten+

**C. DOCUMENTS CONSIDERED TO BE RELEVANT**

| Category* | Citation of document, with indication, where appropriate, of the relevant passages | Relevant to claim No. |
|---|---|---|
| X | CN 104037373 A (JIANGSU HUADONG INSTITUTE OF LI-ION BATTERY et al.) 10 September 2014 (2014-09-10)<br> description, paragraphs 21-65, and figures 1-8 | 1-24 |
| X | JP 2017069169 A (RICOH K. K.) 06 April 2017 (2017-04-06)<br> description, paragraphs 11-26, and figures 1-10 | 1-24 |
| A | CN 212848599 U (JIANGSU TAFEL NEW ENERGY TECHNOLOGY CO., LTD. et al.) 30 March 2021 (2021-03-30)<br> entire document | 1-24 |
| A | CN 216872186 U (CONTEMPORARY AMPEREX TECHNOLOGY CO., LTD.) 01 July 2022 (2022-07-01)<br> entire document | 1-24 |
| A | CN 217158492 U (CONTEMPORARY AMPEREX TECHNOLOGY CO., LTD.) 09 August 2022 (2022-08-09)<br> entire document | 1-24 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 June 2023** | **23 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| | | | International application No.<br>**PCT/CN2022/127966** |

| Patent document<br>cited in search report | Publication date<br>(day/month/year) | Patent family member(s) | Publication date<br>(day/month/year) |
|---|---|---|---|
| CN 104037373 A | 10 September 2014 | WO 2015176592 A1 | 26 November 2015 |
| JP 2017069169 A | 06 April 2017 | None | |
| CN 212848599 U | 30 March 2021 | None | |
| CN 216872186 U | 01 July 2022 | None | |
| CN 217158492 U | 09 August 2022 | None | |

Form PCT/ISA/210 (patent family annex) (July 2022)